# EUROPEAN PATENT APPLICATION

(11) **EP 1 398 354 A1**
(43) Date of publication of application: **17.03.2004**
(21) Application number: 02720622.6
(22) Date of filing: 26.04.2002
(51) Int. Cl.: C08L 101/10

(54) **POLYMERIC MATERIAL, MOLDED ARTICLE, AND PROCESSES FOR PRODUCING THESE**

(30) Priority: 26.04.2001 JP 2001129565
(71) Applicant: Orient Chemical Industries, Ltd., Osaka-shi, Osaka 535-0022 (JP); Shioyama, Manabu, Osaka-shi, Osaka 536-0008 (JP); Shimada, Masayuki, Sakai-shi, Osaka 590-0117 (JP); OSAKA MUNICIPAL GOVERNMENT, Osaka-shi, Osaka 530-8201 (JP)
(72) Inventor: SHIOYAMA, Manabu;, Osaka-shi, Osaka 536-0008 (JP); SHIMADA, Masayuki, Sakai-shi, Osaka 590-0117 (JP); AGARI, Yasuyuki, Osaka-shi, Osaka 542-0063 (JP); ARAKAWA, Motoomi, Osaka-shi, Osaka 536-0001 (JP); SUKATA, Kazuaki, Yawata-shi, Kyoto 614-8375 (JP)
(74) Representative: VOSSIUS & PARTNER
(86) International application number: PCT/JP2002/004222
(87) International publication number: WO 2002/088255

(57) **Abstract**

Disclosed is a polymeric material obtained by melt-kneading, using a kneading machine, a resin composition which contains organic polymers having metal alkoxy groups. An organic-inorganic hybrid polymeric material which is suitable for use in high-performance and high-function polymeric materials, was provided.

## Description

### Technical Field

The present invention relates to a polymeric material useful for various plastic materials, to a molded product and to a method for there production.

### Background Art

Plastics are substituting for existing materials, such as metal, glass, wood, and paper, due to their molding processabilities, high productivities, light weights, flexibilities, excellent mechanical or electrical properties, etc. Their application range is wide and they are used for a variety of applications such as construction materials, structural or mechanical parts of electric or electronic products, exterior or interior parts of automobiles, vehicles, aircraft and ships, miscellaneous goods and packing materials. For this reason, there are many kinds of plastics and those of various types are marketed.

However, there is a great demand from the market for improvement in various characteristics or cost, and alloying of different plastics and compounding with other ingredients are performed briskly. For example, about the improvement in mechanical property, heat resistance, dimensional stability and the like, organic-inorganic composite materials in which a solid inorganic material typified by glass fiber and carbon fiber has been blended were studied. This technique has improved strength, thermal deformation resistance in a short period of time, dimensional stability and the like.

However, a plastic and an inorganic material are generally incompatible and it is difficult to finely disperse both materials and, consequently, the size of dispersed particles of an inorganic material in an organic-inorganic composite material is generally up to the order of micrometers. Since the size of particles have great effects on strength such as tensile strength and the strength is reduced as particles becomes larger (see L. E. Nielsen, Dynamic Properties of Polymer and Composite Material, p. 253), it is natural that there are limitations to the improvement in strength of organic-inorganic composite materials described above. Further, for some types of plastics, e.g., ABS resin, polyamide 6-6, polycarbonate, polyacetal and fully aromatic polyester, there have been raised new problems such as reduction in impact strength caused by decrease in interfacial strength.

On the other hand, organic-inorganic hybrid polymeric materials containing inorganic elements such as Si, Ti and Zr introduced into their backbone have been studied for the purpose of improvement in various physical properties of plastics including surface hardness, luster, antifouling property, strength, heat resistance, weather resistance, chemical resistance and the like.

The size of dispersed particles of each component of an organic-inorganic hybrid polymeric material is up to the orders of sub-microns to nanometers and it is possible to disperse the components at the molecular level. As a method for the preparation thereof, for example, there have been known a method subjecting an organic monomer or an organic polymer and an inorganic backbone-containing compound to radical copolymerization and a method bonding an inorganic functional group such as alkoxysilane as a side chain to an organic polymer and thereafter cross-linking it.

For example, Japanese Patent Kokai Publication No. H5-43679 and Japanese Patent Kokai Publication No. H5-86188 disclose a method for obtaining an organic-inorganic hybrid polymeric material by allowing a vinyl polymer and a silicon compound to react and thereafter cross-linking them by a sol-gel method. Japanese Patent Kokai Publication No. H8-104710 and Japanese Patent Kokai Publication No. H8-104711 disclose a method for obtaining an organic-inorganic hybrid polymeric material by subjecting vinyl monomers to radical polymerization with an alkoxysilyl group-terminated azo-type initiator and hydrolyzing and condensing the resulting alkoxysilyl group-terminated vinyl polymer. Further, we reported in Japanese Patent Kokai Publication No. H11-209596, etc., a method for obtaining an organic-inorganic hybrid polymeric material by synthesizing an alkoxysilyl group-terminated polycarbonate or polyarylate and thereafter hydrolyzing and polycondensing it by a sol-gel method.

However, most of the conventional organic-inorganic hybrid polymeric materials are produced by methods in a solution system using a sol-gel method. The sol-gel method is a method for molding glass or ceramic by starting from a solution, passing a state of sol containing fine particles and further passing a state of gel containing a liquid or the air in a space defined by the frames of a solid (see Sumio SAKKA, Science of the Sol-Gel Method, Introduction). Accordingly, although simple structures such as films and rods can be produced, it is very difficult to produce molded products of complex shape. The methods carried out in a solution system are disadvantageous also in terms of productivity and cost and, therefore, are not practical except for specific applications.

Japanese Patent Kokai Publication No. 2000-327930 discloses a method for producing an organic-inorganic hybrid polymeric material by heat-treating an organic polymer, an organic polymer having a metal alkoxy group, a metal alkoxide compound or a metal oxide with a mixer such as a Brabender. However, such a mixer has only a poor kneading ability since its mixing portion is constituted of a pair of blades having a short shaft. In addition, one pair of blades are fixed so that it is impossible to set the conditions of the kneading portion depending upon a material to be employed. Such a mixer, therefore, is difficult to finely disperse an organic polymer and an inorganic component such as metal oxide, which are of great incompatibility, with each other and is not suitable for the preparation of organic-inorganic hybrid polymeric materials. Furthermore, such a mixer has many problems with respect to steps and productivity for its industrial use since it is a batch-type instrument.

### Summary of the Invention

The present invention solves the conventional problems and the objective is to provide an organic-inorganic hybrid polymeric material suitable for high-performance and high-function plastics or a molded product containing the material as a component, and simple and practical methods for producing these with high productivity and with low cost.

The present invention provides a polymeric material obtained by melt-kneading, using a kneading machine, a resin composition that contains organic polymers having metal alkoxy groups, a molded product obtained by molding the polymeric material using a molding machine, a process for producing a polymeric material comprising: melt-kneading, using a kneading machine, a resin composition that contains organic polymers having metal alkoxy groups and other organic polymers, and a process for producing a molded product comprising: processing the polymeric material using a molding machine. The object is achieved thereby.

### Detailed Description of the Invention

The present invention provides an organic-inorganic hybrid polymeric material suitable for high-performance and high-function plastic material applications, a molded product containing the material as a component, and simple and practical methods for producing these.

Organic-inorganic hybrid polymeric materials are generally classified into two types. One is those in which the organic components and the inorganic components are bonded with relatively weak connections such as van der Waals force and hydrogen bonds. The other is those in which the organic components and the inorganic components are bonded with strong connections such as covalent bonds and ion bonds. The present invention predominantly pertains to the organic-inorganic hybrid polymeric materials which belong to the latter type.

The organic-inorganic hybrid polymeric materials are, in general, produced via a sol-gel method. The sol-gel method is a method for producing glass or ceramic by starting from a solution and passing through a state of sol containing fine particles and a subsequently occurring state of gel containing a liquid or the air in a space in the framework of the solid (see Sumio Sakka, Science of Sol-Gel Method, Introduction). Accordingly, the conventional processes are those carried out in a solution system using a solvent. However, such a process performed in a solution system is disadvantageous in cost due to use of a large amount of solvent and is of low productivity. Further, it is difficult to produce a molded product of complex shape by that method. Given those facts, a process for producing an organic-inorganic hybrid polymeric material simply and practically at low cost has been awaited.

We studied earnestly in order to respond such a request and, as a result, have developed a simple and practical method in which a raw material containing organic polymers having metal alkoxy groups is kneaded in a kneading machine to obtain a polymeric material containing an organic-inorganic hybrid polymeric material as a component, thereafter the polymeric material is molded to obtain a molded product containing an organic-inorganic hybrid polymeric material as a component.

Specifically, components necessary as the raw material are organic polymers having metal alkoxy groups. The raw material containing this is allowed to react in molten state by being heated in a kneading machine. At this stage, a part of the metal alkoxy groups in the organic polymer undergoes deetheration reaction to form metal-oxygen-metal covalent bonds, and combines the organic polymers. A part of the metal alkoxy groups is converted to metal hydroxide groups (e.g., silanol group) with a small amount of water in the system. The metal hydroxide has high reactivity, and causes condensation reaction, dealcoholation reaction and the like with functional groups having active hydrogen such as a hydroxyl group and an amino group, metal alkoxy groups, metal alkoxide compounds, metal oxides having residual hydroxyl group, metal oxides having functional groups which are introduced by surface treatment, capsulation and the like, on the surface, thereby the organic polymers themselves, or the organic polymers and the the metal oxides or other compounds are combined. The treatment with a kneading machine is carried out not only for causing the above-mentioned reaction but also has an effect of finely dispersing the metal oxides or the inorganic components in the organic polymers uniformly.

As the kneading machine, those conventionally employed may be used. Among them, kneading apparatuses for plastic processing are preferable and single or twin screw extruders are more preferable. In these extruders, screw segments or the like at kneading sites can be freely rearranged and it is possible to set conditions suitable for a material to be treated. Such extruders are used for the reactive processing, which is a major interest plastic processing recently, and is instruments of very high kneading abilities.

Kneading conditions such as temperature, kneading speed and pressure may suitably be determined depending upon the organic polymer to be employed and are not particularly limited on condition that the organic polymer is molten and is fully kneaded with other raw materials. In the case of using multiple kinds of raw materials, it is preferable to premix all or some of the raw materials using an appropriate mixing machine. If the raw materials are expected to be mixed easily, there is no necessity of premixing. In addition, if the kneading machine has incidental equipment such as a side feeder and a liquid feeding machine, it is also possible to use such equipment to feed the raw materials one after another in a suitable order. If kneading or a reaction can be accomplished only to an insufficient degree after onetime treatment, it is possible to treat a kneaded material discharged two or more times using the same kneading machine or to treat that material using a plurality of kneading machine and/or kneading machine of different types. However, from the consideration to practical usability, it is desirable to optimize kneading conditions depending upon the raw materials to be used and finish kneading in a single treatment.

As a method for molding, it is possible to perform molding directly after kneading with an extrusion molding machine or to form a strand obtained after kneading into a suitable form such as pellets and, thereafter, process it with an injection molding machine. As a molding machine, various types of molding machines conventionally employed for plastic processing may be used. A molding machine to be used may be suitably determined depending upon the shape of a desired molded product. For example, in the case where a molded product having a relatively simple shape, such as a film, a sheet, a rod or a pipe, is intended, an extrusion molding machine is recommended. In the case of producing a molded product of a complex shape, an injection molding machine may generally be used.

The following are specific examples.
1) Organic polymers having metal alkoxy groups are melt-kneaded with a kneading machine while being heated, and the metal alkoxy groups are allowed to react so that the organic polymers combine with themselves. If the metal alkoxy groups are bi-functional, an organic-inorganic hybrid polymeric material of linear state is formed. If they are tri-functional or more, that of three dimensional structure is formed.
2) Organic polymers having metal alkoxy groups and other organic polymers which are compatible with the organic polymers are melt-kneaded with a kneading machine while being heated, and the metal alkoxy groups are allowed to react to produce a polymeric material in which organic-inorganic hybrid polymeric materials are contained as components, and metal oxides and/or inorganic components are uniformly and finely dispersed.
3) Organic polymers having metal alkoxy groups, other organic polymers which are compatible with the organic polymers and metal alkoxide compounds (which comprise partial hydrolyzate and polycondensate of metal alkoxide compounds) are melt-kneaded with a kneading machine while being heated, and the metal alkoxy groups in the organic polymers and metal alkoxide compounds are allowed to react to produce a polymeric material in which organic-inorganic hybrid polymeric materials are contained as components, and metal oxides and/or inorganic components are uniformly and finely dispersed.
4) Organic polymers having metal alkoxy groups, other organic polymers which are compatible with the organic polymers and metal oxides are melt-kneaded with a kneading machine while being heated, and the metal alkoxy groups in the organic polymers and metal oxides are allowed to react to produce a polymeric material in which organic-inorganic hybrid polymeric materials are contained as components, and metal oxides and/or inorganic components are uniformly and finely dispersed.
5) Organic polymers having metal alkoxy groups, other organic polymers which are compatible with the organic polymers, metal alkoxide compounds (which comprise partial hydrolyzate and polycondensate of metal alkoxide compounds) and metal oxides are melt-kneaded with a kneading machine while being heated, and the metal alkoxy groups in the organic polymers, metal alkoxide compounds and metal oxides are allowed to react to produce a polymeric material in which organic-inorganic hybrid polymeric materials are contained as components, and metal oxides and/or inorganic components are uniformly and finely dispersed.

### Organic Polymers Having Metal Alkoxy Groups

In the present invention, the organic polymers having metal alkoxy groups are essential raw materials, and the metal alkoxy groups are converted to metal oxides and/or inorganic components with kneading treatment. If the raw material is treated solely, the organic polymers form crosslinked structure through the metal oxides and/or the inorganic components. Further, if the raw material is treated with metal alkoxide compounds (which comprise partial hydrolyzate and polycondensate of metal alkoxide compounds) and/or metal oxides, the organic polymers combine covalently with the metal oxides and/or the inorganic components through the metal alkoxy group to form an organic-inorganic hybrid polymeric material. Additionally, if the raw material is treated with other organic polymers having compatibility, the raw material and/or an organic-inorganic hybrid polymeric material prepared from the raw material work as a surface modifying agent, and provide affinity between the organic polymers and the metal oxides and/or inorganic components, which are usually incompatible.

The organic polymers having metal alkoxy groups may be those prepared by any method. A main backbone of them may specifically be thermoplastic resins or thermoplastic elastomer precursors such as polyethylene, polypropylene, vinyl chloride resin, polystyrene, methyl methacrylate resin, acrylic resin, polyamide, polyacetal, polycarbonate, polyester, polyphenylene ether, polymethyl pentene, polysulfone, polyether sulfone, polyphthalamide, polyphenylene sulfide, polyarylate, polyimide, polyether imide, and polyether ketone; and thermosetting resin precursors such as phenol resin, epoxy resin, unsaturated polyester resin, melamine resin, alkyd resin, urea resin, and silicone resin.

Among these, the thermoplastic resins are preferred, and engineering plastics such as polyamide, polyacetal, polycarbonate, polysulfone, and polyarylate are more preferred due to their high performance.

The organic polymers having metal alkoxy groups may have a main backbone of one component selected from the above described polymers or have a backbone of a copolymer thereof. The organic polymers may be a mixture of the plural polymers, and it may be linear or branched. The organic polymers have a number average molecular weight of from 500 to 50000, more preferably 1000 to 15000.

The functional group equivalent of the organic polymers having metal alkoxy groups is generally 1 to 100, preferably 1 to 50, more preferably 2 to 10. If the functional group equivalent is less than 1, performance of the resulting polymeric material may become poor because bonding to metal oxides and/or inorganic components becomes insufficient, and if it is more than 100, the resulting material may become fragile because structure of the organic-inorganic hybrid polymeric material is not fine.

The metal alkoxy groups contained in the organic polymers having metal alkoxy groups may be of the same kind in all or be of plural kinds. Metal elements of the the metal alkoxy groups are, not particularly limited but preferably, the metal elements selected from the group consisting of Si, Ti, Zr, Fe, Cu, Sn, B, Al, Ge, Ce, Ta and W and the like, more preferably the metal elements selected from the group consisting of Si, Ti and Zr. When availability of compound for introducing metal alkoxy groups into organic polymers is taken into consideration, the most preferred metal element is Si. The alkoxy groups preferably have 1 to 8 carbon atoms, more preferably have 1 to 4. Number of the alkoxy groups which bonds to the metal element is not limited to but preferably not less than 2.

### Organic Polymers other than the Organic Polymers Having Metal Alkoxy Groups

In the present invention, organic polymers other than the organic polymers having metal alkoxy groups (other organic polymers) may be employed in combination. This organic polymers on this occasion are employed for forming a matrix in the polymeric material. The organic polymers are sufficient so long as it has compatibility with the organic polymers having metal alkoxy groups, and it need not be the same backbone as the organic polymers having metal alkoxy groups. The organic polymers may be those prepared by any method.

A main backbone of them may be thermoplastic resins or thermoplastic elastomer precursors such as polyethylene, polypropylene, vinyl chloride resin, polystyrene, methyl methacrylate resin, acrylic resin, polyamide, polyacetal, polycarbonate, polyester, polyphenylene ether, polymethyl pentene, polysulfone, polyether sulfone, polyphthalamide, polyphenylene sulfide, polyarylate, polyimide, polyether imide, and polyether ketone; and thermosetting resin precursors such as phenol resin, epoxy resin, unsaturated polyester resin, melamine resin, alkyd resin, urea resin, and silicone resin.

Among these, the thermoplastic resins are preferred, and engineering plastics such as polyamide, polyacetal, polycarbonate, polysulfone, and polyarylate are more preferred due to their high performance.

The organic polymers may have a main backbone of one component selected from the above described polymers or have a backbone of a copolymer thereof. The organic polymers may be a mixture of the plural polymers, and it may be linear or branched. Commercially available products may be employed as them. A number average molecular weight of the organic polymers is not limited to but generally from about 500 to 100000, preferably 1000 to 50000. They may have or may not have functional groups.

### Metal Alkoxide Compounds

In the present invention, any type of metal alkoxide compounds can be used. Preferred are compounds represented by formula (1):

AₚM (1)

wherein A is an alkoxy group having from 1 to 8, preferably from 1 to 4 carbon atoms, M is a metal element selected from the group consisting of Si, Ti, Zr, Fe, Cu, Sn, B, Al, Ge, Ce, Ta, W and the like, preferably the group consisting of Si, Ti and Zr, and p is an integer of from 2 to 6.

Specifically mentioned are tetraalkoxysilanes such as tetramethoxysilane, tetraethoxysilane, tetraisopropoxysilane and tetrabutoxysilane; tetraalkoxytitaniums such as tetra-n-propoxytitanium, tetraisopropoxytitanium and tetrabutoxytitanium; tetraalkoxyzirconiums such as tetra-n-propoxyzirconium, tetraisopropoxyzirconium and tetrabutoxyzirconium; and metal alkoxides such as dimethoxycopper, diethoxybarium, trimethoxyboron, triethoxygallium, tributoxyaluminum, tetraethoxygermanium, tetrabutoxylead, penta-n-propoxytantalum, and hexaethoxytungsten.

Other examples include compounds represented by formula (2):

RₖAₗM(R'ₘX)ₙ (2)

wherein R is hydrogen or an alkyl group having from 1 to 12, preferably from 1 to 5 carbon atoms or a phenyl group, A is an alkoxy group having from 1 to 8, preferably from 1 to 4 carbon atoms, M is a metal element selected from the group consisting of Si, Ti, Zr, Fe, Cu, Sn, B, Al, Ge, Ce, Ta, W and the like, preferably the group consisting of Si, Ti and Zr, R' is an alkylene or alkylidene group having from 1 to 4, preferably from 2 to 4 carbon atoms, X represents a general functional group such as an isocyanate group, an epoxy group, a carboxyl group, an acid halide group, an acid anhydride group, an amino group, a thiol group, a vinyl group, a methacryl group and a halogen atom, k is an integer of from 0 to 5, l is an integer of from 1 to 5, m is 0 or 1, and n is an integer of from 0 to 5.

When Si is taken as an example, specific examples of the metal alkoxide compound are as follows:
(alkyl)alkoxysilanes such as trimethoxysilane, triethoxysilane, tri-n-propoxysilane, dimethoxysilane, diethoxysilane, diisopropoxysilane, monomethoxysilane, monoethoxysilane, monobutoxysilane, methyldimethoxysilane, ethyldiethoxysilane, dimethylmethoxysilane, diisopropylisopropoxysilane, methyltrimethoxysilane, ethyltriethoxysilane, n-propyltri-n-propoxysilane, butyltributoxysilane, dimethyldimethoxysilane, diethyldiethoxysilane, diisopropyldiisopropoxysilane, dibutyldibutoxysilane, trimethylmethoxysilane, triethylethoxysilane, tri-n-propyl-n-propoxysilane, tributylbutoxysilane, phenyltrimethoxysilane, diphenyldiethoxysilane and triphenylmethoxysilane;
(alkyl)alkoxysilanes having isocyanate groups such as 3-isocyanatopropyltriethoxysilane, 2-isocyanatoethyltri-n-propoxysilane, 3-isocyanatopropylmethyldimethoxysilane, 2-isocyanatoethylethyldibutoxysilane, 3-isocyanatopropyldimethylisopropoxysilane, 2-isocyanatoethyldiethylbutoxysilane, di(3-isocyanatopropyl)diethoxysilane, di(3-isocyanatopropyl)methylethoxysilane and ethoxysilane triisocyanate;
(alkyl)alkoxysilanes having epoxy groups such as 3-glycidoxypropyltriethoxysilane, 3-glycidoxypropylmethyldimethoxysilane, 3-glycidoxypropyldimethylethoxysilane, 2-(3,4-epoxycyclohexyl)ethyltrimethoxysilane and 3,4-epoxybutyltrimethoxysilane;
(alkyl)alkoxysilanes having carboxyl groups such as carboxymethyltriethoxysilane, carboxymethylethyldiethoxysilane and carboxyethyldimethylmethoxysilane;
alkoxysilane having an acid anhydride group such as 3-(triethoxysilyl)-2-methylpropylsuccinic anhydride;
alkoxysilanes having acid halide groups such as 2-(4-chlorosulfonylphenyl)ethyltriethoxysilane;
(alkyl)alkoxysilanes having amino groups such as 3-aminopropyltrimethoxysilane, 3-aminopropyltriethoxysilane, N-2-(aminoethyl)-3-aminopropyltriethoxysilane, N-2-(aminoethyl)-3-aminopropylmethyldimethoxysilane and N-phenyl-3-aminopropyltrimethoxysilane;
(alkyl)alkoxysilanes having thiol groups such as 3-mercaptopropyltrimethoxysilane, 2-mercaptoethyltriethoxysilane and 3-mercaptopropylmethyldimethoxysilane;
(alkyl)alkoxysilanes having vinyl groups such as vinyltrimethoxysilane, vinyltriethoxysilane and vinylmethyldiethoxysilane;
(alkyl)alkoxysilanes having methacryl groups such as 3-methacryloxypropyltrimethoxysilane, 3-methacryloxypropyltriethoxysilane and 3-methacryloxypropylmethyldimethylsilane; and
(alkyl)alkoxysilanes having halogen atoms such as triethoxyfluorosilane, 3-chloropropyltrimethoxysilane, 3-bromopropyltriethoxysilane and 2-chloroethylmethyldimethoxysilane.

Similar compounds may, of course, be mentioned for other metals such as Ti, Zr, Fe, Cu, Sn, B, Al, Ge, Ce, Ta and W, as well as Si.

The metal alkoxy compounds may be employed solely or in combination of two or more kinds. Further, a metal alkoxide compound containing, in one molecule, multiple kinds of metal elements, e.g., Mg[Al(iso-OC₃H₇)₄]₂, Ba[Zr₂(OC₂H₅)₉]₂, (C₃H₇O)₂Zr[Al(OC₃H₇)₄]₂, a metal alkoxide compound of oligomer type having, in one molecule, two or more repeating units, e.g., tetramethoxysilane oligomer and tetraethoxysilane oligomer, or a metal alkoxide compound having a three-dimensional structure, e.g., polymethylsilsesquioxane and polyphenylsilsesquioxane may be employed. Moreover, the alkoxy group may be replaced by an acetoxy group, an acetylacetoxy group or the like. Furthermore, the metal alkoxide compound may partially be hydrolyzed or polycondensed.

### Metal Oxides

The metal oxides employed in the present invention are those having active hydroxyl groups (metal hydroxyl groups such as a silanol group) on a particulate surface, or those functional groups having active hydrogen being introduced on a particle surface, by some kinds of surface treatment or capsulation and the like. The metal oxides may be those prepared by hydrolyzing and polycondensing metal alkoxide compounds and/or metal acetoxy compounds, or those commercially available so long as they meet the conditions. Particularly, the metal oxides prepared by hydrolyzing and polycondensing metal alkoxide compounds and/or metal acetoxy compounds are preferred because they have a lot of hydroxyl groups on a particle surface. Examples of the metal element include Si, Ti, Zr, Fe, Cu, Sn, B, Al, Ge, Ce, Ta, W, such as those exemplified for the metal alkoxide compounds.

Specific examples of the metal particles include silicon oxide (silica, silsesquioxanes), titanium oxide (titania), zirconium oxide (zirconia), aluminum oxide (alumina), and the like. Shape or crystal system of the particles is not particularly limited. The smaller the particle size, the more preferable. The particle size is preferably not more than 1 µm, more preferably not more than 0.1 µm. The metal oxides may be employed solely or in combination of two or more kinds. The metal oxides which contain more than one metal elements in the molecule, may be employed.

### Polymeric Materials

The polymeric material of the present invention is prepared from an essential raw material of organic polymers having metal alkoxy groups which are reactable with the metal alkoxide compounds or with the metal oxides. The metal alkoxy groups react with themselves or with the metal alkoxide compounds or with a surface of the metal oxides by heating, with a kneading machine, the organic polymers having metal alkoxy groups solely or with the metal alkoxide compounds or with the metal oxides. As a result, the resulting polymeric material becomes an organic-inorganic hybrid polymeric material in which the polymeric materials combine covalently to the metal oxides and/or the inorganic components. Mechanisms on the reaction are not completely clear, but the organic-inorganic hybrid polymeric material is obtained by the reaction which is promoted with shear and high temperature of the kneading machine, and there is high possibility for that the organic-inorganic hybrid polymeric material is different from the conventional one obtained by the sol-gel method. Therefore this may be an unknown material having excellent qualities or novel functions.

This would be valid for polymeric materials including as components the organic-inorganic hybrid polymeric materials, obtained by treating the organic polymers having metal alkoxy groups, or the organic polymers having metal alkoxy groups, and the metal alkoxide compounds and/or the metal oxides, with other organic polymers which are compatible with the organic polymers having metal alkoxy groups.

In the case when the organic polymers having metal alkoxy groups and other organic polymers which form a matrix are used in combination, blending ratios by weight thereof are not limited to, and they may be blended in any ratios dependent on objective characteristics and functions. However, when costs are taken into consideration, contents of the organic polymer which forms a matrix preferably are not less than 50%, more preferably not less than 70%. Whereas, in order to provide characteristics to the materials, it is preferred that contents of the organic polymers having metal alkoxy groups are not less than 1%, desirably not less than 5%.

In the case when the organic polymers having metal alkoxy groups and the metal alkoxide compounds and/or metal oxides are used in combination, they may also be blended in any ratios. However, when characteristics of the resulting materials are taken into consideration, the weight ratio thereof is preferably in the range of from 1 : 99 to 90 : 10. If amounts used of the organic polymers having metal alkoxy groups is too small, characteristics of the material may become poor because combination with metal oxides and/or inorganic components is insufficient. If amounts used of the metal alkoxide compounds and/or metal oxides is too small, it may be impossible to provide the materials with characteristics. Particularly, some kinds of metal alkoxide compounds may be lost with heat at kneading, and using them in very small amount would not make sense.

### Methods for Producing Polymeric Materials and Molded Products

Methods for producing polymeric materials in the present invention are characterized by melt-kneading a raw material containing at least organic polymers having metal alkoxy groups to allow the organic polymers having metal alkoxy groups to react. This makes it possible to produce simply, at high productivity and low cost, the polymeric materials in which metal oxides which are generally incompatible with organic polymers, are covalently combined to organic polymers and the metal oxides are uniformly and finely dispersed in the organic polymers. The resulting polymeric material may be shaped directly from its molten state after kneading. Alternatively, it may be shaped to an appropriate shape such as pellets from strands discharged from a kneading machine, and then may be processed again.

The following are specific examples of the methods for producing the polymeric materials and the molded products.
1) Organic polymers having metal alkoxy groups are melt-kneaded with being heated using a single screw extruder with allowing the metal alkoxy groups to react so that the organic polymers are bonded to themselves through the bonds of metal-oxygen-metal. The melt-kneaded stuff is thereafter molded to a desired shape such as film, sheet, rod, pipe and the like using an extrusion molding machine along with being discharged from a single screw extruder. The resulting molded products are comprised of an organic-inorganic hybrid polymeric material in which organic polymers are covalently bond to metal oxides and/or inorganic components, and the metal oxides and/or the inorganic components are uniformly dispersed in the organic polymers.
2) Organic polymers having metal alkoxy groups and other organic polymers which are compatible with the organic polymers are premixed by using Henschel mixer. The resulting mixture is melt kneaded with being heated by using a single screw extruder with allowing the metal alkoxy groups to react so that the organic polymers are bonded to themselves through the bonds of metal-oxygen-metal. The melt-kneaded stuff is thereafter molded to a desired shape such as film, sheet, rod, pipe and the like using an extrusion molding machine along with being discharged from a single screw extruder. The resulting molded product is composed of a polymeric material in which organic-inorganic hybrid polymeric material, that is metal oxides and/or inorganic components covalently bonded to organic polymers are uniformly and finely dispersed in organic polymers which form a matrix.
3) Organic polymers having metal alkoxy groups and other organic polymers which are compatible with the organic polymers are premixed by using Henschel mixer. The resulting mixture is charged to a twin screw extruder through a feeder, and heated to be molten state. Metal alkoxide compounds (which comprise partial hydrolyzate and polycondensate of metal alkoxide compounds) are charged through a liquid addition apparatus with allowing the metal alkoxy groups in the polymers and the metal alkoxide compounds to react so that the organic polymers are bonded to the metal oxides and/or the inorganic components. The melt-kneaded stuff is thereafter made to pellets by using a pelletizer. The pellets are then molded to a desired shape by using an injection molding machine and the like. The resulting molded product is composed of a polymeric material in which organic-inorganic hybrid polymeric material, that is metal oxides and/or inorganic components covalently bonded to organic polymers are uniformly and finely dispersed in organic polymers which form a matrix.
4) Organic polymers which form a matrix (other organic polymers which are compatible with organic polymers having metal alkoxy groups) are charged to a twin screw extruder through a feeder, and heated to be molten state. A mixed solution of organic polymers having metal alkoxy groups and metal alkoxide compounds which has been partially hydrolyzed and polycondensed by being dissolved in a suitable solvent and addition of small amount of water. These raw materials are kneaded with proceeding reaction of the metal alkoxy groups in the organic polymers and the metal alkoxide compounds, and with allowing these to disperse finely in the organic polymers which form a matrix. The melt-kneaded stuff is thereafter molded to a desired shape such as film, sheet, rod, pipe and the like using an extrusion molding machine along with being discharged from the twin screw extruder. The resulting molded product is composed of a polymeric material in which organic-inorganic hybrid polymeric material, that is metal oxides and/or inorganic components covalently bonded to organic polymers are uniformly and finely dispersed in organic polymers which form a matrix.
5) Organic polymers having metal alkoxy groups, other polymers which are compatible with the organic polymers and metal oxides are premixed by using Henschel mixer. The resulting mixture is heated in a twin screw extruder to be molten state with allowing the metal alkoxy groups in the polymers and the metal oxides to react so that the organic polymers are bonded to the metal oxides and/or the inorganic components. The melt-kneaded stuff is thereafter made to pellets by using pelletizer with being discharged from the twin screw extruder. The pellets are then molded to a desired shape by using an injection molding machine and the like. The resulting molded product is composed of a polymeric material in which organic-inorganic hybrid polymeric material, that is metal oxides and/or inorganic components covalently bonded to organic polymers are uniformly and finely dispersed in organic polymers which form a matrix.
6) Organic polymers having metal alkoxy groups are charged in a twin screw extruder through a feeder, and heated to be molten state. Metal oxides are then charged through a side feeder, and they are kneaded with allowing the metal alkoxy groups in the polymers and the metal oxides to react so that the organic polymers are bonded to the metal oxides and/or the inorganic components. Organic polymers which form a matrix are charged through other side feeder to be molten state, and they are further kneaded to be finely dispersed in the organic polymers which form a matrix. The melt-kneaded stuff is thereafter molded to a desired shape such as film, sheet, rod, pipe and the like using an extrusion molding machine along with being discharged from the twin screw extruder. The resulting molded product is composed of a polymeric material in which organic-inorganic hybrid polymeric material, that is metal oxides and/or inorganic components covalently bonded to organic polymers are uniformly and finely dispersed in organic polymers which form a matrix.
7) Organic polymers having metal alkoxy groups, other polymers which are compatible with the organic polymers and metal oxides are premixed by using Henschel mixer. The resulting mixture is heated in a twin screw extruder to be molten state. Metal alkoxide compounds (which comprise partial hydrolyzate and polycondensate of metal alkoxide compounds) are then charged through a liquid addition apparatus with allowing the metal alkoxy groups in the polymers, the metal alkoxide compounds and the metal oxides to react so that the organic polymers are bonded to the metal oxides and/or the inorganic components. The melt-kneaded stuff is thereafter made to pellets by using pelletizer along with being discharged from the twin screw extruder. The pellets are then molded to a desired shape by using an injection molding machine. The resulting molded product is composed of a polymeric material in which organic-inorganic hybrid polymeric material, that is metal oxides and/or inorganic components covalently bonded to organic polymers are uniformly and finely dispersed in organic polymers which form a matrix.

In the above production examples, blending ratios by weight of the organic polymers having metal alkoxy groups and the organic polymers which form a matrix are not specifically limited to but, when costs is taken into consideration, contents of the organic polymers which form a matrix preferably is not less than 50%, more preferably not less than 70%. Whereas, in order to provide characteristics to materials, it is preferred that contents of the organic polymers having metal alkoxy groups is not less than 1%, desirably not less than 5%.

The weight ratio of the organic polymers having metal alkoxy groups and the metal alkoxide compounds and/or the metal oxides are from 1:99 to 99:1, preferably 1:99 to 90:10. If amounts used of the organic polymers having metal alkoxy groups is too small, characteristics of the material may become poor because combination with metal oxides and/or inorganic components is insufficient. If amounts used of the metal alkoxide compounds and/or metal oxides is too small, it may be hard to provide the materials with characteristics. Particularly, alkoxide compounds may be lost with heat at kneading, and using them in very small amount would not make sense.

Kneading and shaping conditions including temperature, speed, pressure and the like are suitably determined depending upon the type of the organic polymer to be used and are not particularly restricted as long as those are conditions where the organic polymer is molten and is kneaded fully with other raw materials. If kneading is accomplished to only an insufficient degree through one treatment, the kneaded material discharged may be treated in the same kneading machine twice or more times or the materials may be treated with a plurality of kneading apparatuses and/or kneading apparatuses of different types. Considering the aspect of practical use, however, it is preferable to finish kneading with one treatment by optimizing kneading conditions.

In the kneading step in the present invention, a small amount of moisture or catalyst may be added for the purpose of further improvement of the reactivity of the metal alkoxide compound and/or of the metal alkoxide compound and the organic polymer. The amount of moisture is not particularly limited and may suitably be set depending upon the physical properties of the raw materials to be used, but too much amount of moisture will cause a risk of accidents resulting from burst of steam or the like. Further, it is necessary to set the amount of moisture carefully because a risk of hydrolysis will be caused depending upon the type of the organic polymer. As a catalyst, various kinds of acidic catalysts, basic catalysts and metal catalysts may be used. However, suitable selection of the type and amount of a catalyst is required because an organic polymer may be decomposed by a catalyst depending upon the type of the organic polymer.

In all of the steps in the present invention, metal, e.g., Si, Ti, Zr, Fe, Cu, Sn, B, Al, Ge, Ce, Ta and W, metal oxide, metal complex, inorganic salt and the like may be used for the purpose of improving or providing functions such as strength, hardness, weather resistance, chemical resistance, flame retardancy and electrostaticity. Further, plasticizers such as those generally employed may optionally be used depending upon the type of the organic polymer to be used.

The polymeric material produced by the method of the present invention contains an organic polymer well having characteristics possessed by an inorganic material, such as mechanical strength, heat resistance, weather resistance, surface hardness, rigidity, water resistance, chemical resistance, antifouling property and flame retardancy. In other words, the inorganic material well has characteristics possessed by the organic polymer, such as impact resistance, flexibility and processability.

### Effects of the Invention

The present invention provides polymeric materials required to have high performance and high function such as films, structural materials, optical materials, surface modifiers, electric or electronic materials and medical materials, and a simple and practical method for producing the same at low cost. In addition, the aforementioned high-performance and high-function polymeric materials having complex shapes can be molded because general molding machines for plastics such as injection molding machines and extrusion molding machines can be employed in the production method of the present invention.

### Examples

The present invention is further specifically illustrated by the following Examples, however the present invention is not limited thereby.

### Preparation Example 1

Polycarbonate diol was prepared from commercially available polycarbonate and bisphenol A by the ester exchange method. The polycarbonate diol was dissolved in chloroform, and 3-isocyanatopropyltriethoxysilane was added to the solution and allowed to react. The reaction mixture was put into methanol to make the product deposited, then it was filtered, washed with methanol and dried.

The resulting product was determined by ¹H-NMR measurement to be both ends triethoxysililated polycarbonate (PCS) to which alkoxysilyl groups are introduced at the both ends. GPC measurement determined the number average molecular weight of the product to be 7800.

### Preparation Example 2

Polysulfone diol was prepared from commercially available polysulfone and bisphenol A. The polysulfone diol was dissolved in chloroform, and 3-isocyanatopropyltriethoxysilane was added to the solution and allowed to react. The reaction mixture was put into methanol to make the product deposited, then it was filtered, washed with methanol and dried.

The resulting product was determined by ¹H-NMR measurement to be both ends triethoxysililated polysulfone (PSFS) to which alkoxysilyl groups are introduced at the both ends. GPC measurement determined the number average molecular weight of the product to be 6000.

### Preparation Example 3

Polyarylate diol was prepared from commercially available polyarylate and bisphenol A by the ester exchange method. The polyarylate diol was dissolved in chloroform, and 3-isocyanatopropyltriethoxysilane was added to the solution and allowed to react. The reaction mixture was put into methanol to make the product deposited, then it was filtered, washed with methanol and dried.

The resulting product was determined by ¹H-NMR measurement to be both ends triethoxysililated polyarylate (PARS) to which alkoxysilyl groups are introduced at the both ends. GPC measurement determined the number average molecular weight of the product to be 6700.

### Preparation Example 4

Dithiophenyl adipate and hexamethylenediamine were allowed to react in a solvent of hexamethylphosphorylamide by the solution polycondensation method. 3-isocyanatopropyltriethoxysilane was added to at nearly end of the reaction so that triethoxysilyl groups were introduced to the polycondensate at the both ends. Acetone was added to the reaction mixture to make the polycondensate deposited, then it was filtered, washed with acetone and dried.

Intrinsic viscosity of the resulting both ends triethoxysilylated polyamide 6-6 (PAMS) was measured by using m-cresol as a solvent, and determined to be 0.5 g/dL, about 0.5 dL/g under a condition of 25°C.

### Preparation Example 5

1,3,5-trioxane was allowed to ring-opening polymerization in cyclohexane solvents using boron trifluoride etherate as a catalyst. A small amount of ethylene glycol was added to at nearly end of the reaction. 3-isocyanatopropyltriethoxysilane was added to so that triethoxysilyl groups were introduced to the polymer at the both ends. The reaction mixture was put into methanol to make the polymer deposited, then it was filtered, washed with methanol and dried to obtain both ends triethoxysililated polyacetal (POMS).

### Preparation Example 6

Ethylene glycol and terephthalic dichloride were allowed to react in chloroform solvents using triethylamine as a catalyst by the solution polycondensation method. 3-isocyanatopropyltriethoxysilane was added to at nearly end of the reaction so that triethoxysilyl groups were introduced to the polycondensate at the both ends. Acetone was then added to the reaction mixture to make the polycondensate deposited, then it was filtered, washed with acetone and dried.

The resulting product was determined by ¹H-NMR measurement to be both ends triethoxysililated polyethylene terephthalate (PETS) to which alkoxysilyl groups are introduced at the both ends. Intrinsic viscosity of PETS was measured by using tetrachloroethane/phenol=4/6 as a solvent, and determined to be 0.5 g/dL, about 0.4 dL/g under a condition of 25°C.

### Preparation Example 7

Butylene glycol and terephthalic dichloride were allowed to react in chloroform solvents using triethylamine as a catalyst by the solution polycondensation method. 3-isocyanatopropyltriethoxysilane was added to at nearly end of the reaction so that triethoxysilyl groups were introduced to the polycondensate at the both ends. Acetone was then added to the reaction mixture to make the polycondensate deposited, then it was filtered, washed with acetone and dried.

The resulting product was determined by ¹H-NMR measurement to be both ends triethoxysililated polybutylene terephthalate (PBTS) to which alkoxysilyl groups are introduced at the both ends. Intrinsic viscosity of PBTS was measured by using tetrachloroethane/phenol=4/6 as a solvent, and determined to be 0.5 g/dL, about 0.4 dL/g under a condition of 25°C.

### Preparation Example 8

Methyl methacrylate and a small amount of 3-methacryloxypropyltriethoxysilane were subjected to suspension polymerization in water containing a surface active agent using azobisisobutyronitrile as an initiator. The resulting polymer was then filtered, washed with water and dried.

The resulting product was determined by ¹H-NMR measurement to be triethoxysililated polymethyl methacrylate (PMMAS) to which alkoxysilyl groups are introduced in the molecule. GPC measurement determined the number average molecular weight of PMMAS to be 7500.

### Preparation Example 9

Styrene and a small amount of 3-methacryloxypropyltriethoxysilane were subjected to suspension polymerization in water containing a surface active agent using azobisisobutyronitrile as an initiator. The resulting polymer was then filtered, washed with water and dried.

The resulting product was determined by ¹H-NMR measurement to be triethoxysililated polystyrene (PSTS) to which alkoxysilyl groups are introduced in the molecule. GPC measurement determined the number average molecular weight of PSTS to.be 8200.

### Preparation Example 10

Styrene, acrylonitrile and a small amount of 3-methacryloxypropyltriethoxysilane were subjected to suspension polymerization in water containing a surface active agent using benzoyl peroxide as an initiator. The resulting polymer was then filtered, washed with water and dried.

The resulting product was determined by ¹H-NMR measurement to be triethoxysililated AS resin (ASS) to which alkoxysilyl groups are introduced in the molecule. GPC measurement determined the number average molecular weight of ASS to be 8200.

### Preparation Example 11

Vinyl chloride and a small amount of 3-methacryloxypropyltriethoxysilane were subjected to suspension polymerization in water containing a surface active agent using benzoyl peroxide as an initiator. The resulting polymer was then filtered, washed with water and dried.

The resulting product was determined by ¹H-NMR measurement to be triethoxysililated polyvinyl chloride (PVCS) to which alkoxysilyl groups are introduced in the molecule. GPC measurement determined the number average molecular weight of PVCS to be 9000.

### Example 1

1500g of PCS having a number average molecular weight of 7800 prepared in Preparation Example 1 was charged into a compact high-speed twin screw extruder Model KZW15-45MG manufactured by Technovel Corporation and was treated at a feeder rotation speed of 80 rpm, a screw rotation speed of 300 rpm and a temperature of 200°C. The reactant was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 220°C and various kinds of test pieces were prepared.

### Example 2

200g of PCS having a number average molecular weight of 7800 prepared in Preparation Example 1, and 1300g of polycarbonate having a number average molecular weight of 28000 were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 70 rpm, a screw rotation speed of 200 rpm and a temperature of 280°C. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 300°C and various kinds of test pieces were prepared.

### Example 3

95g of PCS having a number average molecular weight of 7800 prepared in Preparation Example 1, and 1405g of polycarbonate having a number average molecular weight of 28000 were uniformly mixed using Henschel mixer FM10B manufactured by Mitsui Miike Kakohki K.K. The mixture was charged into a compact high-speed twin screw extruder Model KZW 15-45MG manufactured by Technovel Corporation and was treated at a feeder rotation speed of 70 rpm, a screw rotation speed of 200 rpm and a temperature of 280°C, along with 80g of tetraethoxysilane being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 300°C and various kinds of test pieces were prepared.

### Example 4

95g of PCS having a number average molecular weight of 7800 prepared in Preparation Example 1, and 1405g of polycarbonate having a number average molecular weight of 28000, and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 200 rpm and a temperature of 280°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 300°C and various kinds of test pieces were prepared.

### Example 5

150g of PSFS having a number average molecular weight of 6000 prepared in Preparation Example 2, and 1350g of polysulfone having a number average molecular weight of 22000 were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 60 rpm, a screw rotation speed of 200 rpm and a temperature of 330°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 350°C and various kinds of test pieces were prepared.

### Example 6

75g of PSFS having a number average molecular weight of 6000 prepared in Preparation Example 2, and 1425g of polysulfone having a number average molecular weight of 22000 were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 60 rpm, a screw rotation speed of 200 rpm and a temperature of 330°C, along with 80g of tetraethoxysilane being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 350°C and various kinds of test pieces were prepared.

### Example 7

85g of PARS having a number average molecular weight of 6700 prepared in Preparation Example 3, and 1415g of polyarylate having a number average molecular weight of 6700 were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 60 rpm, a screw rotation speed of 150 rpm and a temperature of 300°C, along with 8g of tetramethoxysilane oligomer having an average molecular weight of 1000 being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 320°C and various kinds of test pieces were prepared.

### Example 8

85g of PARS having a number average molecular weight of 6700 prepared in Preparation Example 3, 1415g of polyarylate, and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 150 rpm and a temperature of 300°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 320°C and various kinds of test pieces were prepared.

### Example 9

100g of PAMS prepared in Preparation Example 4, and 1400g of polyamide 6-6 were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 80 rpm, a screw rotation speed of 200 rpm and a temperature of 280°C, along with 80g of tetraethoxysilane being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 280°C and various kinds of test pieces were prepared.

### Example 10

100g of POMS prepared in Preparation Example 5, 1400g of polyacetal, and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 200 rpm and a temperature of 180°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 200°C and various kinds of test pieces were prepared.

### Example 11

100g of PETS prepared in Preparation Example 6, and 1400g of polyethylene terephthalate were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 60 rpm, a screw rotation speed of 200 rpm and a temperature of 280°C, along with 8g of tetramethoxysilane oligomer having an average molecular weight of 1000 being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 280°C and various kinds of test pieces were prepared.

### Example 12

100g of PBTS prepared in Preparation Example 7, 1400g of polybutylene terephthalate, and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 150 rpm and a temperature of 230°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 230°C and various kinds of test pieces were prepared.

### Example 13

95g of PMMAS having a number average molecular weight of 7500 prepared in Preparation Example 8, and 1405g of a methacrylic resin were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 70 rpm, a screw rotation speed of 200 rpm and a temperature of 150°C, along with 80g of tetraethoxysilane being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 180°C and various kinds of test pieces were prepared.

### Example 14

95g of PMMAS having a number average molecular weight of 7500 prepared in Preparation Example 8, 1405g of a methacrylic resin, and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 200 rpm and a temperature of 150°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 180°C and various kinds of test pieces were prepared.

### Example 15

95g of PSTS having a number average molecular weight of 8200 prepared in Preparation Example 9, and 1405g of polystyrene were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 70 rpm, a screw rotation speed of 200 rpm and a temperature of 170°C, along with 8g of tetramethoxysilane oligomer having an average molecular weight of 1000 being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 200°C and various kinds of test pieces were prepared.

### Example 16

95g of PSTS having a number average molecular weight of 8200 prepared in Preparation Example 9, 1405g of polystyrene and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 200 rpm and a temperature of 170°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 200°C and various kinds of test pieces were prepared.

### Example 17

95g of ASS having a number average molecular weight of 8200 prepared in Preparation Example 10, and 1405g of an AS resin were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 60 rpm, a screw rotation speed of 200 rpm and a temperature of 170°C, along with 80g of tetraethoxysilane being gradually added to through a liquid addition apparatus, and further treated. The kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 200°C and various kinds of test pieces were prepared.

### Example 18

100g of PVCS having a number average molecular weight of 9000 prepared in Preparation Example 11, 1400g of a vinyl chloride resin and 1.5g of fine particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 200 rpm and a temperature of 150°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 170°C and various kinds of test pieces were prepared.

### Comparative Examples 1 to 11

Polycarbonate (Comparative Example 1), polysulfone (Comparative Example 2), polyarylate (Comparative Example 3), polyamide 6-6 (Comparative Example 4), polyacetal (Comparative Example 5), polyethylene terephthalate (Comparative Example 6), polybutylene terephthalate (Comparative Example 7), a methacrylic resin (Comparative Example 8), polystyrene (Comparative Example 9), an AS resin (Comparative Example 10), or a vinyl chloride resin (Comparative Example 11) which was the same as that employed in Examples 1 to 18 was injection molded with a compact injection molding machine HM-7DENKEY manufactured by Nissei Plastic Industrial Co., Ltd. under an appropriate basic condition at a molding temperature of 170°C to 350°C, and various kinds of test pieces were prepared.

### Comparative Example 12

3.0g of PCS having a number average molecular weight of 7800 prepared in Preparation Example 1, 45g of polycarbonate having a number average molecular weight of 28000, 2.6g of tetraethoxysilane were charged into Brabender HBI System Model 90 manufactured by Hake Co., and mixed at 280°C for 10 minutes. The resulting mixture was taken out, cooled, and, thereafter, crushed with a crusher. The resulting crushed stuff was injection molded with a compact injection molding machine HM-7DENKEY manufactured by Nissei Plastic Industrial Co., Ltd. under a basic conditions at a melting temperature of 300°C and various kinds of test pieces were prepared.

### Comparative Example 13

3.1g of PCS having a number average molecular weight of 7800 prepared in Preparation Example 1, 46g of polycarbonate having a number average molecular weight of 28000, 0.05g of particulate silica were charged into Brabender HBI System Model 90 manufactured by Hake Co., and mixed at 280°C for 10 minutes. The resulting mixture was taken out, cooled, and, thereafter, crushed with a crusher. The resulting crushed stuff was injection molded with a compact injection molding machine HM-7DENKEY manufactured by Nissei Plastic Industrial Co., Ltd. under a basic conditions at a melting temperature of 300°C and various kinds of test pieces were prepared.

### Comparative Example 14

1500g of polycarbonate having a number average molecular weight of 28000, and 3g of particulate silica were uniformly mixed using Henschel mixer FM10B manufactured by Mitsui Miike Kakohki K.K. The mixture was charged into a compact high-speed twin screw extruder Model KZW15-45MG manufactured by Technovel Corporation and was treated at a feeder rotation speed of 50 rpm, a screw rotation speed of 200 rpm and a temperature of 280°C, and the kneaded stuff was cooled and made to pellets with a pelletizer. The resulting pellets were injection molded with a compact injection molding machine HM-7DENKEY manufactured by Nissei Plastic Industrial Co., Ltd. under a basic conditions at a molding temperature of 300°C and various kinds of test pieces were prepared.

### Ashing test (according to JIS K 7052)

For the purpose of ascertaining the metal oxide content in polymeric materials, a test was carried out. 3 to 5g of sample was charged into a porcelain crucible. By use of a gas burner, volatile components were removed and low-temperature-decomposable components were burned. The crucible was subsequently transferred into a muffle electric furnace and the sample was incinerated through heating at 630°C for at least 3 hours. From the weight of the resulting white ash, the metal oxide content in the material was calculated. The test results are shown in Tables 1 and 2.

Theoretical value of metal oxide content in the polymeric material was 1.5% as to Example 1, and 0.2% as to other Examples. The results of the test confirmed that all the polymeric materials of Examples contained the metal oxides and the inorganic components in approximately theoretical value.

### Rockwell hardness test (according to JIS K 7202)

For the purpose of ascertaining the hardness of polymeric materials, a test was carried out. Before the test, a specimen was subjected to conditioning by being left in a thermostatic chamber at a temperature of 24°C and a humidity of 58% for at least 48 hours. As an instrument, Model ORK manufactured by Akashi Seisakusho Co., Ltd. The test load and the test scale were determined suitably depending upon the kind of organic polymers. The test results are shown in Tables 1 and 2.

The hardness of the polymeric material prepared in each Example was compared with that of the plastics (Comparative Examples 1 to 11) to be used as a matrix. As a result, improvement in hardness was found for all of the Examples. The polymeric materials of a polycarbonate class (Examples 1 to 4) were also compared with Comparative Examples 12 to 14. As a result, the polymeric materials of Examples 1 to 4 were distinctive to that of Comparative Example 12 in which tetraethoxysilane was employed although they were similar in hardness to Examples 13 and 14 in which particulate silica was employed. The resulted difference in hardness would be due to the metal oxides in the polymeric material. That is, the abovedescribed differences in hardness are supposed to be because no metal oxides was contained in Comparative Examples 1 to 11, and because poor kneading ability of the machine made the reaction insufficient and the metal oxides amount contained became relatively low though treating period was sufficient in Comparative Example 12. Therefore the metal oxides and the inorganic components are supposed to be present uniformly and appropriately in the polymeric materials prepared by the method of the present invention.

### Tensile test (according to JIS K 7113)

For the purpose of ascertaining the mechanical characteristics of polymeric materials, a test was carried out. As a specimen, a half-size first type specimen provided in JIS K 7113 was used. Before the test, a specimen was subjected to conditioning by being left in a thermostatic chamber at a temperature of 24°C and a humidity of 58% for at least 48 hours. As an instrument, AUTOGRAPH DSS-5000 manufactured by Shimadzu Corporation. The load cell and the test speed were set to 500 kgf and 10 m/min, respectively. The test results are shown in Tables 3 and 4.

The tensile yield strength, the tensile elastic modulus, and tensile breaking elongation of the polymeric material prepared in each Example were compared with those of the plastics (Comparative Examples 1 to 11) to be used as a matrix. As a result, improvement in yield strength and elastic modulus was found for all of the Examples. The polymeric materials of a polycarbonate class (Examples 1 to 4) were also compared with Comparative Examples 12 to 14. As a result, the polymeric materials of Examples 1 to 4 were distinctive in yield strength and the elastic modulus to that of Comparative Example 12, and in breaking elongation to Comparative Examples 13 and 14. The resulted difference in yield strength and the elastic modulus would be due to the metal oxides and the inorganic components in the polymeric material. It is the same in tendency as that various glass-fiber reinforced plastics which are commercial available are compared with the plastics which are not reinforced. As to the polymer material of Comparative Example 12, these results would be caused by relatively low metal oxide amount because of low kneading ability of the machine.

Though it is conventional that the glass-fiber reinforced plastics becomes substantially low in tensile breaking elongation than those which are not reinforced, the polymeric materials prepared by the method of the present invention were equal in tensile breaking elongation to the comparative plastics. The polymeric materials of Comparative Examples 13 and 14 were slightly lower in elongation than other polymeric materials of a polycarbonate class. These differences are supposed to be caused by difference in state of the metal oxides and the inorganic components which are present in the materials.

The glass-fiber reinforced plastics are in the state of that glass-fibers are dispersed at a size of not less than micrometers in the plastics which work as a matrix, no strong bond is present between the glass-fiber and the plastics, and interfacial strength between the two components is weak. On the other hand, in the polymeric materials prepared by the production method of the present invention, the metal oxides and the inorganic components are finely dispersed with being bonded covalently to the polymer which has compatibility with the plastics which work as a matrix, and the interfacial strength is strong. In the polymeric material of Comparative Example 13, the reaction does not proceed sufficiently due to poverty of kneading ability of the machine, so silica bonded to the polymeric material is coexistent with silica not bonded to the polymeric material, the interfacial strength therefore becomes medium, and it would result in abovedescribed difference. The polymeric material of Comparative Example 14 does not have strong bond between the polycarbonate and the silica, and interfacial strength between the two components are supposed to be low.

### Bending test (according to JIS K )

A test was carried out for the purpose of ascertaining the mechanical strength of polymeric materials. As a specimen, a standard specimen provided in JIS K 7171 was used. Before the test, a specimen was subjected to conditioning by being left in a thermostatic chamber at a temperature of 24°C and a humidity of 58% for at least 48 hours. As an instrument, AUTOGRAPH DSS-5000 manufactured by Shimadzu Corporation. The load cell and the test speed were set to 100 kgf and 2 m/min, respectively. The test results are shown in Tables 3 and 4.

The polymeric materials prepared in each Example were compared in bending strength with the plastics which work as a matrix. As a result, improvement in bending strength was found for all of the Examples. The results are similar to the tensile test, and are supposed to be dependent on the state of the metal oxides and the inorganic components in the polymeric materials.

### Izod impact test (according to JIS K 7110)

For ascertaining the impact resistance of polymeric materials, evaluation was made for some materials. As a specimen, a second type specimen of A notch type provided in JIS K 7110 was used. Before the test, a specimen was subjected to conditioning by being left in a thermostatic chamber at a temperature of 24°C and a humidity of 58% for at least 48 hours. As an instrument, an Izod tester manufactured by Toyo Seiki Seisaku-Sho, Ltd. The results of the test are shown in Tables 3 and 4.

The polymeric materials of a polycarbonate class prepared in Examples 1 to 4 were evaluated and were compared to polycarbonate (Comparative Example 1) and to Comparative Examples 12 to 14. As a result, the polymeric material of Example 1 which is only employed PCS as a raw material is slightly inferior in impact strength to polycarbonate. The polymeric material is a crosslinked body in which the polycarbonate components are bonded three dimensionally through siloxy groups, so degree of freedom of the polycarbonate components is thus restricted, and impact resistance which the polycarbonate components have is not supposed to be exhibited sufficiently.

On the other hand, the polymeric material of Examples 2 to 4 which employ polycarbonate as a matrix showed impact resistance which is similar to the polycarbonate. In the polymeric material, the metal oxides and the inorganic components are finely dispersed in a matrix in the state of being bonded covalently to the polycarbonate component, and impact resistance which the polycarbonate components have is not supposed to be harmed. The polymeric materials of Comparative Examples 13 and 14 were low in impact strength. These differences are supposed to be caused by the difference in the state of the metal oxides and the inorganic components which are present in the materials.

### Haze test

For the purpose of ascertaining the transparency of polymeric materials, an evaluation was made for some materials. As a specimen, a second type specimen provided in JIS K 7110 was used. As an instrument, Haze Meter NDH 2000 manufactured by Nippon Denshoku Industries Co., Ltd. The results of the test are shown in Table 5.

The polymeric materials of a polycarbonate class prepared in Examples 1 to 4 were evaluated and were compared to polycarbonate (Comparative Example 1) and to Comparative Example 14. As a result, although the polymeric materials of Comparative Example 14 and Example 4 were reduced in transparency due to the fine particulate silica which was added to, the other polymeric materials exhibited a transparency equivalent to or higher than that of the polycarbonate. The reason for improvement in transparency of the polymer materials of Examples 1 to 3 is not clear. However, the polymeric materials are prepared by allowing the metal oxides and the inorganic components to react in a kneading machine, and the size thereof is expected to be smaller than the particulate silica. In addition, the metal oxides and the inorganic components are supposed to finely and uniformly be dispersed in the polymeric materials of Examples 1 to 3. So transparency of the polymeric materials at least is not supposed to be harmed.

### Dynamic viscoelasticity test

For the purpose of ascertaining the heat resistance of polymeric materials, an evaluation was made for some materials. As a specimen, a second type specimen provided in JIS K 7110 was used after being cut into a suitable length. A test was carried out at a bending mode using, as an instrument, a viscoelasticity spectrometer SDM 5600 manufactured by Seiko Instruments Inc. The rate of raising temperature, the test temperature and the frequency were set to 2°C /min, 20 to 210°C, and 1 Hz, respectively. The heat resistance of a material was evaluated based on the softening and melting temperature of a specimen determined from a storage elastic modulus curve. The results of the test are shown in Table 6.

The polymeric materials of a polycarbonate class prepared in Examples 1 to 4 were evaluated and were compared to polycarbonate. As a result, improvement in heat resistance was confirmed in all the Examples. The improvement is supposed to be caused by that the metal oxides and the inorganic components are finely dispersed in a matrix in the state of being bonded covalently to the polycarbonate compounds.

**Table 1**

| Metal oxide content and hardness of polymeric material | | |
|---|---|---|
| Sample | Metal oxide content (%) | Rockwell hardness |
| C. Example 1 | not more than 0.01 | L89 |
| C. Example 12 | 0.08 | L91 |
| C. Example 13 | 0.19 | L98 |
| C. Example 14 | 0.22 | L100 |
| Example 1 | 1.45 | L122 |
| Example 2 | 0.20 | L98 |
| Example 3 | 0.22 | L99 |
| Example 4 | 0.16 | L103 |
| C. Example 2 | not more than 0.01 | L85 |
| Example 5 | 0.18 | L93 |
| Example 6 | 0.18 | L98 |
| C. Example 3 | not more than 0.01 | R61 |
| Example 7 | 0.19 | R71 |
| Example 8 | 0.24 | R74 |
| C. Example 4 | not more than 0.01 | R107 |
| Example 9 | 0.23 | R117 |
| C. Example 5 | not more than 0.01 | M90 |
| Example 10 | 0.23 | M98 |

**Table 2**

| Metal oxide content and hardness of polymeric material | | |
|---|---|---|
| Sample | Metal oxide content (%) | Rockwell hardness |
| C. Example 6 | not more than 0.01 | M96 |
| Example 11 | 0.17 | M103 |
| C. Example 7 | not more than 0.01 | M75 |
| Example 12 | 0.20 | M90 |
| C. Example 8 | not more than 0.01 | M79 |
| Example 13 | 0.16 | M88 |
| Example 14 | 0.22 | M95 |
| C. Example 9 | not more than 0.01 | M71 |
| Example 15 | 0.21 | M78 |
| Example 16 | 0.20 | M80 |
| C. Example 10 | not more than 0.01 | M78 |
| Example 17 | 0.17 | M85 |
| C. Example 11 | not more than 0.01 | M75 |
| Example 18 | 0.19 | M82 |

**Table 3**

| Mechanical properties of polymeric material | | | | | |
|---|---|---|---|---|---|
| Sample | Tensile properties | | | Bending properties | Impact resistance |
| | Yield strength (MPa) | Breaking elongation (%) | Modulus of elasticity (MPa) | Bending strength (MPa) | Impact strength (kJ/m²) |
| C. Example 1 | 59 | 114 | 1980 | 85 | 70 |
| C. Example 12 | 64 | 98 | 2120 | - | 66 |
| C. Example 13 | 70 | 73 | 2290 | - | 62 |
| C. Example 14 | 68 | 64 | 2210 | - | 55 |
| Example 1 | 70 | 7 | 2700 | 100 | 55 |
| Example 2 | 75 | 111 | 2300 | 106 | 69 |
| Example 3 | 81 | 123 | 2310 | 122 | 71 |
| Example 4 | 78 | 117 | 2250 | 113 | 73 |
| C. Example 2 | 71 | 95 | 2050 | 105 | - |
| Example 5 | 92 | 93 | 2430 | 135 | - |
| Example 6 | 99 | 95 | 2480 | 157 | - |
| C. Example 3 | 70 | 70 | 1400 | 78 | - |
| Example 7 | 88 | 62 | 1890 | 99 | - |
| Example 8 | 84 | 55 | 1900 | 95 | - |
| C. Example 4 | 68 | 53 | 2030 | 84 | - |
| Example 9 | 82 | 55 | 2460 | 97 | - |
| C. Example 5 | 62 | 61 | 2670 | 107 | - |
| Example 10 | 74 | 53 | 3470 | 122 | - |

**Table 4**

| Mechanical properties of polymeric material | | | | | |
|---|---|---|---|---|---|
| Sample | Tensile properties | | | Bending properties | Impact resistance |
| | Yield strength (MPa) | Breaking elongation (%) | Modulus of elasticity (MPa) | Bending strength (MPa) | Impact strength (kJ/m²) |
| C. Example 6 | 50 | 71 | 2910 | 105 | - |
| Example 11 | 71 | 59 | 3240 | 141 | - |
| C. Example 7 | 48 | 91 | 1700 | 78 | - |
| Example 12 | 58 | 72 | 2010 | 95 | - |
| C. Example 8 | 51 | 5 | 2330 | 80 | - |
| Example 13 | 72 | 6 | 2770 | 105 | - |
| Example 14 | 65 | 2 | 2800 | 103 | - |
| C. Example 9 | 39 | 2 | 1950 | 77 | - |
| Example 15 | 51 | 2 | 2480 | 92 | - |
| Example 16 | 52 | 1 | 2540 | 90 | - |
| C. Example 10 | 63 | 4 | 2220 | 85 | - |
| Example 17 | 76 | 2 | 2880 | 101 | - |
| C. Example 11 | 40 | 62 | 2260 | 79 | - |
| Example 18 | 49 | 56 | 2420 | 97 | - |

**Table 5**

| Transparency of polymeric material | |
|---|---|
| Sample | Haze value |
| C. Example 1 | 16.7 |
| C. Example 14 | 19.4 |
| Example 1 | 14.0 |
| Example 2 | 13.2 |
| Example 3 | 13.6 |
| Example 4 | 18.1 |

**Table 6**

| Heat resistance of polymeric material | |
|---|---|
| Sample | Softening temperature (°C) |
| C. Example 1 | 171 |
| Example 1 | 230 |
| Example 2 | 191 |
| Example 3 | 192 |
| Example 4 | 192 |

## Claims

1. A polymeric material obtained by melt-kneading, using a kneading machine, a resin composition which contains organic polymers having metal alkoxy groups.

2. A polymeric material obtained by melt-kneading, using a kneading machine, a resin composition which contains organic polymers having metal alkoxy groups and other organic polymers.

3. A polymeric material obtained by melt-kneading, using a kneading machine, a resin composition which contains organic polymers having metal alkoxy groups, other organic polymers and metal alkoxide compounds (which comprise partial hydrolyzates and polycondensates of metal alkoxide compounds).

4. A polymeric material obtained by melt-kneading, using a kneading machine, a resin composition which contains organic polymers having metal alkoxy groups, other organic polymers and metal oxides.

5. The polymeric material according to claim 1 obtained by allowing the organic polymers having metal alkoxy groups to react in the melt-kneading.

6. The polymeric material according to claim 2 obtained by allowing the organic polymers having metal alkoxy groups to react in the melt-kneading.

7. The polymeric material according to claim 3 obtained by allowing the organic polymers having metal alkoxy groups and the metal alkoxide compounds to react in the melt-kneading.

8. The polymeric material according to claim 4 obtained by allowing the organic polymers having metal alkoxy groups and the metal oxides to react in the melt-kneading.

9. The polymeric material according to any one of claims 1 to 4 wherein the kneading machine is a single screw extruder or a twin screw extruder.

10. The polymeric material according to any one of claims 1 to 8 wherein the organic polymers having metal alkoxy groups have a main backbone of a thermoplastic resin.

11. The polymeric material according to any one of claims 2 to 4 wherein other organic polymers have a main backbone of a thermoplastic resin.

12. The polymeric material according to claim 10 or 11 wherein the thermoplastic resin is polycarbonate, polyarylate, polysulfone, polyamide, polyacetal, polyethylene terephthalate, or polybutylene terephthalate.

13. The polymeric material according to claim 10 or 11 wherein the thermoplastic resin is a methacrylic resin, an acrylic resin, polystyrene, an AS resin (acrylonitrile/styrene copolymer), an ABS resin (acrylonitrile/butadiene/styrene copolymer), or a vinyl chloride resin.

14. The polymeric material according to any one of claims 1 to 8 wherein a metal element of the metal alkoxy groups is at least one selected from the group consisting of Si, Ti and Zr.

15. The polymeric material according to claim 3 or 7 wherein a metal element of the metal alkoxide compounds is at least one selected from the group consisting of Si, Ti and Zr.

16. The polymeric material according to claim 4 or 8 wherein a metal element of the metal oxides is at least one selected from the group consisting of Si, Ti and Zr.

17. The polymeric material according to any one of claims 1 to 8 wherein a metal element of the metal alkoxy groups is Si.

18. The polymeric material according to claim 3 or 7 wherein a metal element of the metal alkoxide compounds is Si.

19. The polymeric material according to claim 4 or 8 wherein a metal element of the metal oxides is Si.

20. A molded product obtained by molding the polymeric material according to any one of claims 1 to 19 using a molding machine.

21. The molded product according to claim 20 wherein the molding machine is an injection molding machine or an extrusion molding machine.

22. A process for producing a polymeric material comprising:
melt-kneading, using a kneading machine, a resin composition which contains organic polymers having metal alkoxy groups.

23. A process for producing a polymeric material comprising:
melt-kneading, using a kneading machine, a resin composition which contains organic polymers having metal alkoxy groups and other organic polymers.

24. A process for producing a polymeric material comprising:
melt-kneading, using a kneading machine, a resin composition which contains organic polymers having metal alkoxy groups, other organic polymers and metal alkoxide compounds (which comprise partial hydrolyzates and polycondensates of metal alkoxide compounds).

25. A process for producing a polymeric material comprising:
melt-kneading, using a kneading machine, a resin composition which contains organic polymers having metal alkoxy groups, other organic polymers and metal oxides.

26. The process according to any one of claims 22 to 25 wherein the kneading machine is a single screw extruder or a twin screw extruder.

27. The process according to any one of claims 22 to 25 wherein the organic polymers having metal alkoxy groups have a main backbone of a thermoplastic resin.

28. The process according to any one of claims 23 to 25 wherein other organic polymers have a main backbone of a thermoplastic resin.

29. The process according to claim 27 or 28 wherein the thermoplastic resin is polycarbonate, polyarylate, polysulfone, polyamide, polyacetal, polyethylene terephthalate, or polybutylene terephthalate.

30. The process according to claim 27 or 28 wherein the thermoplastic resin is a methacrylic resin, an acrylic resin, polystyrene, an AS resin (acrylonitrile/styrene copolymer), an ABS resin (acrylonitrile/butadiene/styrene copolymer), or a vinyl chloride resin.

31. The process according to any one of claims 22 to 25 wherein a metal element of the metal alkoxy groups is at least one selected from the group consisting of Si, Ti and Zr.

32. The process according to claim 24 wherein a metal element of the metal alkoxide compounds is at least one selected from the group consisting of Si, Ti and Zr.

33. The process according to claim 25 wherein a metal element of the metal oxides is at least one selected from the group consisting of Si, Ti and Zr.

34. The process according to any one of claims 22 to 25 wherein a metal element of the metal alkoxy groups is Si.

35. The process according to claim 24 wherein a metal element of the metal alkoxide compounds is Si.

36. The process according to claim 25 wherein a metal element of the metal oxides is Si.

37. A process for producing a molded product comprising:
molding the polymeric material according to any one of claims 1 to 19 using a molding machine.

38. The process according to claim 37 wherein the molding machine is an injection molding machine or an extrusion molding machine.

## Amended claims

### Amended claims under Art. 19.1 PCT

**1.** (Amended) A polymeric material obtained by melt-kneading, using a kneading machine, a resin composition which contains organic polymers having metal alkoxy groups, wherein the organic polymers having metal alkoxy groups have a main backbone of a thermoplastic resin which is polycarbonate, polyarylate, polysulfone, polyamide, polyacetal, polyethylene terephthalate, or polybutylene terephthalate.

**2.** A polymeric material obtained by melt-kneading, using a kneading machine, a resin composition which contains organic polymers having metal alkoxy groups and other organic polymers.

**3.** A polymeric material obtained by melt-kneading, using a kneading machine, a resin composition which contains organic polymers having metal alkoxy groups, other organic polymers and metal alkoxide compounds (which comprise partial hydrolyzates and polycondensates of metal alkoxide compounds).

**4.** A polymeric material obtained by melt-kneading, using a kneading machine, a resin composition which contains organic polymers having metal alkoxy groups, other organic polymers and metal oxides.

**5.** The polymeric material according to claim 1 obtained by allowing the organic polymers having metal alkoxy groups to react in the melt-kneading.

**6.** The polymeric material according to claim 2 obtained by allowing the organic polymers having metal alkoxy groups to react in the melt-kneading.

**7.** The polymeric material according to claim 3 obtained by allowing the organic polymers having metal alkoxy groups and the metal alkoxide compounds to react in the melt-kneading.

**8.** The polymeric material according to claim 4 obtained by allowing the organic polymers having metal alkoxy groups and the metal oxides to react in the melt-kneading.

**9.** The polymeric material according to any one of claims 1 to 4 wherein the kneading machine is a single screw extruder or a twin screw extruder.

**10.** (Canceled)

**11.** The polymeric material according to any one of claims 2 to 4 wherein other organic polymers have a main backbone of a thermoplastic resin.

**12.** (Amended) The polymeric material according to claim 11 wherein the thermoplastic resin is polycarbonate, polyarylate, polysulfone, polyamide, polyacetal, polyethylene terephthalate, or polybutylene terephthalate.

**13.** (Amended) The polymeric material according to claim 11 wherein the thermoplastic resin is a methacrylic resin, an acrylic resin, polystyrene, an AS resin (acrylonitrile/styrene copolymer), an ABS resin (acrylonitrile/butadiene/styrene copolymer), or a vinyl chloride resin.

**14.** The polymeric material according to any one of claims 1 to 8 wherein a metal element of the metal alkoxy groups is at least one selected from the group consisting of Si, Ti and Zr.

**15.** The polymeric material according to claim 3 or 7 wherein a metal element of the metal alkoxide compounds is at least one selected from the group consisting of Si, Ti and Zr.

**16.** The polymeric material according to claim 4 or 8 wherein a metal element of the metal oxides is at least one selected from the group consisting of Si, Ti and Zr.

**17.** The polymeric material according to any one of claims 1 to 8 wherein a metal element of the metal alkoxy groups is Si.

**18.** The polymeric material according to claim 3 or 7 wherein a metal element of the metal alkoxide compounds is Si.

**19.** The polymeric material according to claim 4 or 8 wherein a metal element of the metal oxides is Si.

**20.** A molded product obtained by molding the polymeric material according to any one of claims 1 to 19 using a molding machine.

**21.** The molded product according to claim 20 wherein the molding machine is an injection molding machine or an extrusion molding machine.

**22.** (Amended) A process for producing a polymeric material comprising:
melt-kneading, using a kneading machine, a resin composition which contains organic polymers having metal alkoxy groups, wherein the organic polymers having metal alkoxy groups have a main backbone of a thermoplastic resin which is polycarbonate, polyarylate, polysulfone, polyamide, polyacetal, polyethylene terephthalate, or polybutylene terephthalate.

**23.** A process for producing a polymeric material comprising:
melt-kneading, using a kneading machine, a resin composition which contains organic polymers having metal alkoxy groups and other organic polymers.

**24.** A process for producing a polymeric material comprising:
melt-kneading, using a kneading machine, a resin composition which contains organic polymers having metal alkoxy groups, other organic polymers and metal alkoxide compounds (which comprise partial hydrolyzates and polycondensates of metal alkoxide compounds).

**25.** A process for producing a polymeric material comprising:
melt-kneading, using a kneading machine, a resin composition which contains organic polymers having metal alkoxy groups, other organic polymers and metal oxides.

**26.** The process according to any one of claims 22 to 25 wherein the kneading machine is a single screw extruder or a twin screw extruder.

**27.** (Canceled)

**28.** The process according to any one of claims 23 to 25 wherein other organic polymers have a main backbone of a thermoplastic resin.

**29.** (Amended) The process according to claim 28 wherein the thermoplastic resin is polycarbonate, polyarylate, polysulfone, polyamide, polyacetal, polyethylene terephthalate, or polybutylene terephthalate.

**30.** (Amended) The process according to claim 28 wherein the thermoplastic resin is a methacrylic resin, an acrylic resin, polystyrene, an AS resin (acrylonitrile/styrene copolymer), an ABS resin (acrylonitrile/butadiene/styrene copolymer), or a vinyl chloride resin.

**31.** The process according to any one of claims 22 to 25 wherein a metal element of the metal alkoxy groups is at least one selected from the group consisting of Si, Ti and Zr.

**32.** The process according to claim 24 wherein a metal element of the metal alkoxide compounds is at least one selected from the group consisting of Si, Ti and Zr.

**33.** The process according to claim 25 wherein a metal element of the metal oxides is at least one selected from the group consisting of Si, Ti and Zr.

**34.** The process according to any one of claims 22 to 25 wherein a metal element of the metal alkoxy groups is Si.

**35.** The process according to claim 24 wherein a metal element of the metal alkoxide compounds is Si.

**36.** The process according to claim 25 wherein a metal element of the metal oxides is Si.

**37.** (Amended) A process for producing a molded product comprising:
molding the polymeric material according to any one of claims 1 to 9, and 11 to 19 using a molding machine.

**38.** The process according to claim 37 wherein the molding machine is an injection molding machine or an extrusion molding machine.

Statement under Art. 19.1 PCT
Claim 1 was restricted by being inserted with Claims 10 and 12. Claim 22 was likely restricted by being inserted with Claims 27 and 29.

The cited reference discloses the art in which a resin having a main backbone of a polypropylene and a polyether resin and having alkoxysilyl groups, is melt-kneaded. It was clarified by the restriction of Claims 1 and 22 that the main backbone of the resin was polycarbonate, polyarylate, polysulfone, polyamide, polyacetal, polyethylene terephthalate; or polybutylene terephthalate which was not the polypropylene nor the polyether.

The present invention provides a simple and a practical methods for producing an organic-inorganic hybrid polymeric material suitable for use in high-performance and high-function plastic materials. Specifically, it achieves an advantage of which the organic-inorganic hybrid polymeric material having fine combination between inorganic components and organic polymer components is provided, by simply melt-kneading in an extruder.
